# EUROPÄISCHE PATENTANMELDUNG

(11) **EP 1 550 543 A1**
(43) Veröffentlichungstag der Anmeldung: **06.07.2005**
(21) Anmeldenummer: 04025247.0
(22) Anmeldetag: 23.10.2004
(51) Int. Cl.: B29C 47/68, B29C 47/92

(54) **Kontinuierlicher Bandsiebwechsler mit Regelkreis**

(30) Priorität: 02.12.2003 DE 10356711
(71) Anmelder: Maag Pump Systems Textron GmbH, 34131 Kassel (DE)
(72) Erfinder: Emhardt, Peter, 34134 Kassel (DE)
(74) Vertreter: Lau-Loskill, Philipp, Dipl.-Phys.

(57) **Zusammenfassung**

Es werden ein Bandsiebwechsler sowie ein Verfahren zum kontinuierlichen Filtrieren einer polymeren Schmelze beschrieben, wobei der Bandsiebwechsler zwei Siebblockhälften (10, 12), zwischen denen eine schlitzförmige Siebbandförderzone (20) zur Aufnahme eines transportierbaren Siebbandes (22) ausgebildet ist, einen quer zum Siebband (22) verlaufenden Schmelzekanal (14, 16), eine dem Schmelzekanal (14, 16) zugeordnete Siebblockheizung (36), eine siebbandeinlaufseitige, in Transportrichtung des Siebbandes (22) gesehen vor der Siebblockheizung (36) angeordnete erste Temperierzone (38) und eine siebbandauslaufseitige, in Transportrichtung des Siebbandes (22) gesehen hinter der Siebblockheizung (36) angeordnete zweiten Temperierzone (44) enthält.

Desweiteren weist der Bandsiebwechsler wenigstens eine Meßvorrichtung zur Erfassung von mindestens einem Istwert eines Arbeitsparameters und wenigstens eine Steuereinrichtung (56) auf, die den Istwert mit einem vorgebbaren Sollwert vergleicht und in Abhängigkeit von wenigstens einer Ist-Sollwert-Abweichung wenigstens eine Stellgröße erzeugt, und daß in Abhängigkeit dieser Stellgröße wenigstens eine Stellvorrichtung den Siebbandvorschub, insbesondere die Siebbandvorschubslänge und/oder die Siebbandvorschubsgeschwindigkeit, automatisch einstellt.

## Beschreibung

Die vorliegende Erfindung betrifft einen Bandsiebwechsler mit den Merkmalen des Oberbegriffs des Patentanspruchs 1, ein Verfahren mit den Merkmalen des Oberbegriffs des Patentanspruchs 25 sowie die Verwendung eines derartigen Bandsiebwechslers.

Um polymere Schmelzen von unerwünschten und die weitere Kunststoffverarbeitung störenden Fremdpartikeln zu befreien, ist es bekannt, daß derartige Schmelzen durch entsprechende, mit Filtern versehene Vorrichtungen geführt werden. So wird beispielsweise der verflüssigte Kunststoff durch eine entsprechende Filtervorrichtung strömen gelassen, wobei diese Filtervorrichtung in der Regel derart im Strömungsweg positioniert ist, daß sie in Strömungsrichtung der zu filtrierenden polymeren Schmelze gesehen stromab des Extruders und vor dem jeweiligen Werkzeug oder einer Düse angeordnet ist. Grundsätzlich werden derzeit unterschiedliche Bauweisen von Filtervorrichtungen, die auch Siebwechsler genannt werden, verwendet.

Als Filtervorrichtung wird zum einen ein sogenannter Bolzenwechsler betrieben, wie dieser beispielsweise aus der DE 196 12 790 bekannt ist, und bei dem sich ein Bolzen innerhalb der Bohrung eines Filtergehäuses axial zwischen einer Filtrierstellung und einer Reinigungsstellung verschieben läßt. In dem Gehäuse ist ein mit einem Extruder verbindbarer Schmelzeeintrittskanal und ein Schmelzeaustrittskanal, der zu einem Werkzeug oder zu einer Düse führt, ausgebildet. Innerhalb des Bolzens befindet sich ein Verbindungskanal zur Aufnahme plattenartiger Siebe. Durch ein axiales Verschieben des Bolzens zwischen einer Arbeitsstellung und einer Rückspülstellung kann dann wahlweise die polymere Schmelze gefiltert oder das mit Schmutz beladene Filter rückgespült werden, wobei bei der Rückspülung ein Teilstrom der filtrierten polymeren Schmelze umgelenkt und durch das zu reinigende Filter geführt wird. Der so mit Schmutz beladene Teilstrom wird dann zur Atmosphäre hin abgeführt, so daß beim Rückspülen ein Verlust an polymerer Schmelze auftritt. Beim Betrieb eines derartigen Bolzenwechsler muß eine Bedienungsperson ständig den Filtrierprozeß beobachten, um bei nachlassendem Schmelzestrom, der auf eine Verschmutzung des aktiven Filters hindeutet, eine Verschiebung des Bolzens zu veranlassen, so daß dann das andere Filter in Filtrierstellung durchströmt wird während der bisherige aktive Filter seine Rückspülstellung einnimmt. Bei einer extrem starken, nicht mehr durch Rückspülung zu entfernenden Verschmutzung eines Filters muß der Filtrierprozeß unterbrochen werden, um dieses Filter dann auszutauschen.

Anstelle des zuvor beschriebenen Bolzenwechsler kann auch ein sogenannter Bandsiebfilter zur kontinuierlichen Filtrierung von polymeren Schmelzen verwendet werden. Bekannte Bandsiebwechsler bestehen im wesentlichen aus zwei Siebblockhälften, wobei die eine Siebblockhälfte einen mit einem Extruder verbindbaren Schmelzeeintrittskanal und die andere Siebblockhälfte einen Schmelzeaustrittskanal aufweist, der zu einem Werkzeug oder zu einer Düse führt. Die beiden genannten Kanäle bilden den Schmelzekanal. Quer zu dem Schmelzekanal ist zwischen den Siebblockhälften eine schlitzförmige Siebbandförderzone ausgebildet, die der Aufnahme eines durch die Siebbandförderzone transportierbaren Siebbandes dient, wobei das Siebband in der Regel als Siebbandkassette mit einer Vorrat zwischen etwa 5 m und etwa 40 m an Siebband vorgelegt wird. Dabei befindet sich immer ein Abschnitt des Siebbandes im Schmelzekanal und filtriert den Schmelzestrom. Ist dieser Abschnitt des Siebbandes durch Schmutzpartikel verunreinigt, so wird das Siebband um eine Siebbandvorschublänge weiter transportiert, so daß ein nicht verunreinigter Abschnitt des Siebbandes in den Schmelzekanal gelangt. Um eine Abkühlung der Schmelze im Schmelzekanal zu vermeiden, ist dem Schmelzekanal eine Siebblockheizung zugeordnet. In Siebbandtransportrichtung beiderseits der Siebblockheizung werden die Siebblockhälften in einer siebbandeinlaufseitigen ersten Temperierzone und in einer siebbandauslaufseitigen zweiten Temperierzone gekühlt, so daß die Schmelze in diesen Bereichen, vorzugsweise im Bereich der Siebbandauslaufseite, der Siebbandförderzone erstarrt, wodurch die Siebbandauslaufseite und/oder die Siebbandeinlaufseite der Siebbandförderzone durch die erstarrte Schmelze abgedichtet wird bzw. werden.

Je nach Verschmutzungsgrad werden zur Erzielung einer gewünschten Siebbandförderung die Endbereiche, insbesondere der siebbandauslaufseitige Endbereich, der Siebbandförderzone erwärmt, um den an dem Siebband anhaftenden Schmelzepfropfen an- bzw. aufzuschmelzen, so daß das Siebband innerhalb der Siebbandförderzone, vorzugsweise durch den innerhalb der Siebbandförderzone herrschenden Schmelzedruckes, transportiert wird. Die hierfür erforderlichen Erwärmungszeiten werden durch eine Bedienungsperson eingestellt, was einen entsprechenden Personalaufwand erfordert. Hierbei hängt es von dem Geschick der Bedienungsperson ab, um welche Länge das Siebband je Zyklus innerhalb der Siebbandförderzone von der Siebbandeinlaufseite zur Siebbandauslaufseite vorwärts bewegt wird. Eine nicht fachgerechte oder unaufmerksame Bedienung kann zu einem unnötig hohen Siebbandverbrauch führen. Die Erwärmung kann auch in festen, vorgegebenen Zeitzyklen erfolgen, welche unabhängig vom jeweiligen Verschmutzungsgrad des Siebbandes gemäß einem Erfahrungswert für die jeweilige polymere Schmelze eingestellt werden. Dies hat desweiteren zur Folge, daß bei unerwartet hoher Schmutzfracht der Schmelze das Siebband schnell zugesetzt wird und den Schmelzedurchtritt in unerwünschter Weise begrenzt, oder daß bei geringer Schmutzfracht das Siebband unnötig schnell an dem Schmelzekanal vorbeigeführt wird, mit der Folge eines unnötig hohen Siebbandverbrauchs.

Der vorliegenden Erfindung liegt die Aufgabe zugrunde, einen Bandsiebwechsler der angegebenen Art zur Verfügung zu stellen, der besonders einfach und zuverlässig unter Einsatz eines reduzierten Personalbedarfs betreibbar ist und mit dem sich der Siebbandverbrauch optimieren läßt.

Diese Aufgabe wird erfindungsgemäß durch einen Bandsiebwechsler mit den kennzeichnenden Merkmalen des Patentanspruchs 1 gelöst.

Der erfindungsgemäße Bandsiebwechsler zum unterbrechungsfreien Filtrieren einer polymeren Schmelze weist, wie der zuvor beschriebene bekannte Bandsiebwechsler, zwei Siebblockhälften, zwischen denen eine schlitzförmige Siebbandförderzone zur Aufnahme eines transportierbaren Siebbandes ausgebildet ist, mindestens einen quer zum Siebband verlaufenden Schmelzekanal, eine dem Schmelzekanal zugeordnete Siebblockheizung, eine siebbandeinlaufseitige, in Transportrichtung des Siebbandes gesehen vor der Siebblockheizung angeordnete erste Temperierzone und eine siebbandauslaufseitige, in Transportrichtung des Siebbandes gesehen hinter der Siebblockheizung angeordnete zweite Temperierzone auf, wobei der Transport des Siebbandes vom Grundsatz so durchgeführt wird, wie dies zuvor bei dem bekannten Bandsiebwechsler beschrieben ist. Im Unterschied jedoch enthält der erfindungsgemäße Bandsiebwechsler wenigstens eine Meßvorrichtung zur Erfassung von mindestens einem Istwert eines Arbeitsparameters und wenigstens eine Steuereinrichtung, die den Istwert mit einem vorgebbaren Sollwert vergleicht und in Abhängigkeit von wenigstens einer Ist-Sollwert-Abweichung wenigstens eine Stellgröße erzeugt. In Abhängigkeit dieser Stellgröße stellt wenigstens eine Stellvorrichtung den Siebbandvorschub, insbesondere die Siebbandvorschubslänge und/oder die Siebbandvorschubsgeschwindigkeit, automatisch ein.

Klarstellend sei angemerkt, daß der Begriff Siebband im Sinne der vorliegenden Erfindung alle Filter, insbesondere bandförmige Metallfilter, umfaßt, die eine vorgegebene Länge, deren Größe mindestens der schlitzförmigen Siebbandförderzone entspricht, besitzen, wobei die Länge der Siebbänder üblicherweise zwischen 5 m und 40 m und vorzugsweise zwischen 10 m und 20 m variiert. Ein derartiges Siebband wird dann in der Regel noch im Bereich des Schmelzekanals von einer metallischen und mit Durchtrittsbohrungen versehene Stützplatte, die in Transportrichtung der zu filtrierenden polymeren Schmelze gesehen stromab des Siebbandes angeordnet ist, abgestützt. Der vom vorliegenden Text verwendete Begriff Ist-Sollwert-Abweichung deckt nicht nur jede tatsächliche Abweichung ab sondern soll auch so verstanden werden, daß die Größe der Abweichung um einen vorgebbaren Wert einstellbar ist, so daß die Stellgröße erst dann erzeugt wird, wenn die Ist-Sollwert-Abweichung diesen vorgegebenen Wert unter- bzw. überschreitet.

Der erfindungsgemäße Bandsiebwechsler weist eine Reihe von Vorteilen auf. So ist zunächst festzuhalten, daß der erfindungsgemäße Bandsiebwechsler eine wirtschaftlich günstige Betriebsweise ohne unnötige, zeitintensive Rückspülungen und ohne unnötigen Schmelzeverlust ermöglicht, da das Siebband automatisch laufend oder in Zyklen, deren zeitlicher Abstand vorzugsweise einstellbar ist, weitertransportiert wird, sobald das Siebband verschmutzt ist, so daß ständig eine unverschmutzte bzw. lediglich gering verschmutzte Siebfläche im Schmelzekanal zur Filtrierung der polymeren Schmelze zur Verfügung steht. Wegen des automatischen Siebbandvorschubs wird ein Druckstoß vermieden, was bei den bekannten Bolzensiebwechslern stets der Fall ist. Desweiteren ist festzuhalten, daß der für den Betrieb des Bandsiebwechslers erforderliche Personalaufwand im Vergleich zu den eingangs beschriebenen Filtervorrichtungen erheblich reduziert ist, was damit zusammenhängt, daß der Vorschub des Siebbandes vollständig automatisch erfolgt und während des Betreibens des erfindungsgemäßen Bandsiebwechslers ein Eingriff der Bedienungsperson in den Filtrierprozeß nicht erforderlich ist. Daher kann für den Betrieb weniger hoch qualifiziertes Personal eingesetzt werden, welches im wesentlichen lediglich verbrauchte Bandfilterrollen gegen neue Bandfilterrollen auswechseln und auf Stör- oder Fehlermeldungen, die gegebenenfalls von der Steuereinrichtung ausgegeben werden, reagieren muß. Dieses Personal wird demnach zeitlich geringer beansprucht und kann zwischenzeitlich auch andere Aufgaben übernehmen, so daß der Einsatz des erfindungsgemäßen Bandsiebwechslers zu einer erheblichen Personalreduzierung führt. Desweiteren ist der Siebbandverbrauch minimiert, da er ständig an die jeweiligen Betriebsbedingungen, d.h. insbesondere an die Schmutzbefrachtung und die jeweilige polymere Schmelze, optimal angepaßt wird, was damit zusammenhängt, daß für die Einstellung des Siebbandvorschubs auf die jeweiligen Arbeitsparameter des Filtrierbetriebs zurückgegriffen wird, aus denen sich Rückschlüsse über den Verschmutzungsgrad des Siebbandes ziehen lassen, so daß eine ständige oder zyklische automatische Anpassung des Siebbandvorschubs an den Verschmutzungsgrad erfolgt. Damit kann einerseits ein unnötig hoher Siebbandverbrauch vermieden werden und andererseits wird ständig ein optimaler Filtrierprozeß gewährleistet, weil sich in dem Schmelzekanal immer eine ausreichend saubere Filterfläche befindet, um die durchtretende Schmelze zu reinigen. Hierdurch wird vermieden, daß sich durch das Siebband aufgrund der zunehmenden Verschmutzung ein unnötig hoher, teilweise auch ungleichmäßiger Gegendruck ausbildet, der erhöhte Anforderungen an die Bereitstellung eines Extruderdrucks stellen würde und der das Füllen des jeweiligen Werkzeugs verzögert und/oder verungleichmäßigt bzw. die Bereitstellung von ausreichender Schmelze für eine Düse in Frage stellen würde. Dadurch wird auch erklärlich, daß mit dem erfindungsgemäßen Bandsiebwechsler einwandfrei, reproduzierbar und ohne Störungen auch solche polymeren Schmelzen filtriert werden können, die empfindlich gegenüber Druckschwankungen sind und/oder die zu unerwünschten Abbaureaktionen während des Filtrierens führen.

Der erfindungsgemäße Bandsiebwechsler ermöglicht sowohl einen diskontinuierlichen Betrieb, bei dem das Siebband in vorgegebenen zeitlichen Arbeitszyklen schrittweise vorwärts transportiert wird, als auch einen kontinuierlichen Betrieb, bei dem das Siebband langsam, mit einer an den Verschmutzungsgrad der polymeren Schmelze angepaßten Geschwindigkeit quer zum Schmelzekanal vorbeigeführt wird.

Gemäß einer ersten bevorzugten Weiterbildung des zuvor beschriebenen erfindungsgemäßen Bandsiebwechslers ist eine Vorrichtung zur mechanischen und/oder berührungslosen Erfassung des Siebbandvorschubs vorgesehen. Dabei eignet sich eine inkrementale Erfassung insbesondere dann, wenn der Siebbandvorschub-Meßwert durch eine digital arbeitende Steuereinrichtung verarbeitet wird. Der erfaßte Meßwert wird dann als Arbeitsparameter herangezogen und dient als Istwert, den die Steuereinrichtung mit einem vorgebbaren Siebbandvorschub-Sollwert vergleicht. Wird durch die Steuereinrichtung eine Ist-Sollwert-Abweichung festgestellt, so bildet die Steuereinrichtung eine entsprechende Stellgröße, die die Stellvorrichtung beeinflußt, um den Siebbandvorschub entsprechend zu verändern. Wenn keine Ist-Sollwert-Abweichung vorliegt, wird der Siebbandvorschub nicht verändert. Bei einem diskontinuierlichen Betrieb erfolgt vorzugsweise eine Anpassung der Siebbandvorschubslänge in einem der Messung nachfolgenden Siebbandtransportschritt, während bei einem kontinuierlichen Betrieb sowohl die Siebbandvorschubslänge als auch die Siebbandvorschubsgeschwindigkeit als Regelgröße herangezogen und ständig angepaßt werden können. Durch die Verwendung des Siebbandvorschubs als Steuer- oder Regelgröße wird der Siebbandvorschub sowohl im diskontinuierlichen als auch im kontinuierlichen Betrieb konstant gehalten, sofern der Sollwert nicht verändert wird. Es wird damit vermieden, daß durch Unachtsamkeit des Bedienungspersonals ein zu großer oder zu kleiner Siebbandvorschub ausgelöst wird.

Um bei dem erfindungsgemäßen Bandsiebwechsler den Siebbandvorschub an den jeweiligen Verschmutzungsgrad des Siebbandes anpassen zu können, sieht eine Weiterbildung des zuvor beschriebenen erfindungsgemäßen Bandsiebwechslers vor, daß wenigstens ein Druckmeßfühler vorhanden ist. Vorzugsweise wird dabei wenigstens ein Druckmeßfühler verwendet, der den Schmelzedruck stromauf des Siebbandes erfaßt. Der erfaßte Druckmeßwert wird durch die Steuereinrichtung herangezogen, um den Sollwert zu beeinflussen. Bei einem unverschmutzten Siebband ist der Schmelzedruck kleiner als bei einem stark verschmutzten Siebband. Daher setzt ein unverschmutztes oder lediglich leicht verschmutztes Siebband dem Schmelzefluß einen relativ geringen Widerstand (Gegendruck) entgegen und der erfaßte Schmelzedruck ist entsprechend gering. Die Steuereinrichtung gibt demgemäß einen geringeren Sollwert vor, so daß die aus der Ist-Sollwert-Abweichung erzeugte Stellgröße einen relativ geringen Siebbandvorschub zur Folge hat. Mit zunehmender Verschmutzung des Siebbandes steigt der Schmelzedruck und somit auch der Sollwert an, was eine Steigerung des Siebbandvorschubs nach sich zieht. Dies bedeutet, daß der Siebbandvorschub in Abhängigkeit der Siebbandverschmutzung erfolgt und somit optimiert wird. Es wird vermieden, daß relativ unbelastetes Siebband durch den Bandsiebwechsler transportiert wird, was zu einer Einsparung von Siebband führt. Zur Sollwerteinstellung kann ein von der Bedienungsperson, beispielsweise durch ein Potentiometer, einstellbarer Wert mit dem gemessenen Druckwert kombiniert, z.B. addiert oder multipliziert, werden. Damit kann die Bedienungsperson die Abhängigkeit zwischen Verschmutzungsgrad und Siebbandvorschub einstellen. An Stelle der zuvor beschriebenen Sollwertnachstellung kann der gemessene Druckwert auch einem Regelkreis zugeführt werden, der parallel zur Siebbandvorschubregelung wirksam ist.

An Stelle des zuvor beschriebenen einen Druckmeßfühlers, der den Druck stromauf des Siebbandes erfaßt, können auch zwei Druckmeßfühler vorgesehen sein, die einerseits den Druck stromauf des Siebbandes und andererseits den Druck stromab des Siebbandes erfassen. Aus den Druckmeßwerten der beiden Druckmeßfühler ermittelt die Steuereinrichtung einen Differenzdruck, der im Vergleich zur Messung des Druckes stromauf des Siebbandes wesentlich empfindlicher auf Verschmutzungsänderungen des aktiven Teils des Siebbandes reagiert. Der Differenzdruck kann in analoger Weise wie oben beschrieben zur Einstellung des Sollwertes herangezogen werden. Unter bestimmten Bedingungen und insbesondere für spezielle polymere Schmelzen oder bei erhöhter Verschmutzung der zu filtrierenden Schmelze kann es auch von Vorteil sein, für die Einstellung des Sollwertes lediglich den Schmelzedruck stromab des Siebbandes heranzuziehen, da an dieser Meßstelle dann das stark verschmutzte Polymere bereits filtriert ist.

Die Begriffe "stromauf" und "stromab" sollen so verstanden werden, daß sie hinsichtlich der Strömungsrichtung der Schmelze einen Ort vor dem Siebband (stromauf) bzw. einen Ort hinter dem Siebband (stromab) bezeichnen.

Bei einem diskontinuierlichen Betrieb wird jeder Siebbandvorschub durch ein Steuersignal ausgelöst. Zu diesem Zweck sieht eine bevorzugte Ausgestaltung des erfindungsgemäßen Bandsiebwechslers vor, daß wenigstens ein Druckmeßfühler zur Erfassung des Schmelzedruckes stromauf und/oder stromab des Siebbandes und/oder zur Erfassung des Differenzdruckes vorgesehen ist. Desweiteren wird wenigstens ein Druckgrenzwert vorgegeben. Die Steuereinheit vergleicht den Druckmeßwert mit dem Druckgrenzwert. Sobald der Druckmeßwert den Druckgrenzwert, vorzugsweise um eine vorgebbare Größe, übersteigt, gibt die Steuereinrichtung ein entsprechendes Signal an die Stellvorrichtung ab und löst einen Siebbandvorschub aus. Überschreitet beispielsweise der Schmelzedruck stromauf des Siebbandes einen eingebbaren Druckgrenzwert, so wird ein Siebbandvorschub ausgelöst. Überschreitet der Schmelzedruck stromauf des Siebbandes nach Abschluß des Siebbandvorschubzyklus den Druckgrenzwert noch immer, so wird erneut ein Siebbandvorschub ausgelöst. Das gleiche gilt, wenn an Stelle des stromauf des Siebbandes herrschenden Schmelzedrucks der Differenzdruck herangezogen wird.

Bei einem diskontinuierlichen Betrieb kann es auch von Vorteil sein, ein Zeitintervall vorzugeben und einen Siebbandvorschub auszulösen, sobald dieses Zeitintervall abgelaufen ist. Die Länge dieses Zeitintervalls ist für das jeweils zu filtrierende Polymere durch die Bedienungsperson an einer geeigneten Eingabe, beispielsweise einem Display, einstellbar. Es ist auch möglich die Auslösung des Siebbandvorschubs sowohl über ein Zeitintervall als auch einen Druckwert (Schmelzedruckes stromauf und/oder stromab des Siebbandes und/oder Differenzdruck) auszulösen. Bei dieser Variante wird der Siebbandvorschub bei dem zuerst eintretenden Ereignis ausgelöst, entweder dem Ablauf des Zeitintervalls oder dem Überschreiten eines Druckgrenzwertes.

Bei einem diskontinuierlichen Betrieb kann der Siebbandvorschub auch manuell durch die Bedienungsperson gestartet werden. Die Zeitdauer des Siebbandvorschubzyklus sowie die Siebbandvorschubslänge und/oder die Siebbandsvorschubgeschwindigkeit werden bei einem derartigen diskontinuierlichen Betrieb vorzugsweise durch die bereits erwähnten Ist-Sollwert-Abweichungen beeinflußt und insbesondere automatisch eingestellt.

Eine vorteilhafte Weiterbildung der zuvor beschriebenen Ausführungsformen des erfindungsgemäßen Bandsiebwechslers sieht vor, daß wenigstens ein Druckmeßfühler zur Erfassung des Schmelzedruckes stromauf und/oder stromab des Siebbandes und/oder zur Erfassung des Differenzdruckes vorgesehen ist. Der erfaßte Druckwert bzw. der erfaßte Differenzdruck dient als Arbeitsparameter und wird als Istwert von der Steuereinrichtung mit einem vorgebbaren Sollwert verglichen. Dies bedeutet, daß der Siebbandvorschub in Abhängigkeit des gemessenen Druckwertes bzw. Differenzdruckwertes erfolgt. In entsprechender Weise kann es von Vorteil sein, die Viskosität oder die Fließgeschwindigkeit der Schmelze als Arbeitsparameter zu erfassen und zur Bildung eines Istwertes heranzuziehen. Zur Bildung des Istwertes können auch mehrere Arbeitsparameter herangezogen werden. Beispielsweise kann aus mehreren der Meßwerte des Siebbandvorschubs, der Drücke stromauf und stromab des Siebbandes, des Differenzdruckes, der Viskosität, der Fließgeschwindigkeit und der Temperatur der Schmelze ein Istwert gebildet werden, wobei der Einfluß der genannten Arbeitsparameter auf den Istwert durch entsprechende Gewichtung vorzugsweise einstellbar ist.

Insbesondere wird der Siebbandvorschub durch Beeinflussung der Gleitfähigkeit des Siebbandes innerhalb der Siebbandförderzone gesteuert, so daß keine gesonderte Antriebsvorrichtung für den Siebbandvorschub erforderlich ist. Wenn die Temperatur des Siebblocks relativ gering ist, erstarrt die Schmelze in der Siebbandförderzone, insbesondere siebbandauslaufseitig, so daß das Siebband mit den Gleitflächen der Siebbandförderzone verklebt und für einen Siebbandvorschub hohe Reibungskräfte überwunden werden müssen, was allenfalls einen langsamen Siebbandvorschub bewirkt. Mit zunehmender Temperatur wird die am Siebband anhaftende Schmelze, insbesondere der Schmelzepfropfen, an- bzw. abgeschmolzen, wodurch sich die Reibungskräfte verringern, so daß sich das Siebband rascher durch die Siebbandförderzone bewegen kann. Die für den Siebbandtransport erforderliche Förderkraft kann insbesondere durch den Druck der in den Schmelzekanal eintretende Schmelze bei einer geeigneten Ausbildung des Schmelzekanals erzeugt werden, wie es nachfolgend noch beschrieben wird.

Eine bevorzugte weitere Ausgestaltung des erfindungsgemäßen Bandsiebwechslers sieht vor, daß die Stellvorrichtung wenigstens ein Heizelement, insbesondere eine Heizpatrone, umfaßt, deren Temperaturwert und/oder deren Heizdauer und/oder deren zeitliches Temperaturprofil in Abhängigkeit der Ist-Sollwert-Abweichung eingestellt wird. Dieses Heizelement dient der Erwärmung des Siebblocks, insbesondere des siebbandeinlaufseitigen und/oder siebbandauslaufseitigen Endes und vorzugsweise des Siebbandauslaufseitigen Endes und somit zur Einstellung der Reibkraft zwischen Siebband und Siebbandförderzone.

Es ist zweckmäßig die Temperatur der durch den Bandsiebwechsler strömenden Schmelze zu erfassen, da dies u.a. Rückschlüsse auf die Viskosität der Schmelze zuläßt. Eine vorteilhafte Weiterbildung des zuvor beschriebenen Bandsiebwechslers sieht daher vor, wenigstens einen Temperatursensor zur Erfassung der Temperatur der in den Bandsiebwechsler einströmenden und/oder der aus dem Bandsiebwechsler ausströmenden Schmelze vorzusehen. Neben einer Temperaturüberwachung kann die Temperatur auch als ein Arbeitsparameter herangezogen werden, dessen Istwert mit einem Sollwert verglichen wird, um den Siebbandvorschub zu beeinflussen und insbesondere automatisch einzustellen.

Um unterschiedliche Eingabe- und Betriebsdaten, wie insbesondere Anfahrmodus, unverbrauchte und/oder verbrauchte Siebbandlänge, verbleibende Arbeitszeit der unverbrauchten Siebbandlänge, Meldung eines anstehenden Siebwechsels, Schmelzedrücke, Schmelzetemperatur und/oder produkt- und/oder maschinenbezogene Daten für die Bedienungsperson erkennbar zu machen, sieht eine Weiterbildung des erfindungsgemäßen Bandsiebwechslers eine Visualisierungseinrichtung vor. Als Visualisierungseinrichtung kann ein Display dienen, auf dem die Daten digital oder analog dargestellt werden. Hierbei kann eine von der Bedienungsperson betätigbare Umschaltvorrichtung vorgesehen sein, durch die eine Auswahl der dargestellten Daten erfolgen kann.

Eine besonders bevorzugte Ausgestaltung des zuvor beschriebenen erfindungsgemäßen Bandsiebwechslers sieht vor, daß die Steuerungseinrichtung wenigstens einen geschlossenen Regelkreis enthält. In diesem Regelkreis bildet der jeweilige Arbeitsparameter eine Regelgröße, deren Meßwert als Istwert verwendet wird. Der Istwert wird mit einem vorgebbaren Sollwert verglichen, um eine Regelabweichung zu bilden. Die Regelabweichung beeinflußt die Stellvorrichtung für den Siebbandvorschub. Um auf das Zeitverhalten der Regelstrecke in zweckmäßiger Weise reagieren zu können, kann das Zeitverhalten des Reglers des Regelkreises optimiert werden, indem in geeigneter Weise ein proportional wirkender, ein integral wirkender, ein proportional-integral wirkender oder ein Regler mit differentiellem Verhalten verwendet wird. Bei Verwendung mehrerer Istwerte kann die Verwendung einer überund untergeordneten Regelung vorteilhaft sein.

Eine Weiterbildung des zuvor beschriebenen erfindungsgemäßen Bandwechslers sieht vor, daß die erste und/oder zweite Temperierzone eine erste bzw. zweite Kühlzone und/oder eine erste bzw. zweite Heizzone umfaßt. Durch die Kühlung des Siebblocks wird die Schmelze in der Siebbandförderzone verfestigt, so daß einerseits die Siebbandförderzone verschlossen und dadurch ein Schmelzeaustritt durch die Siebbandförderzone verhindert wird. Andererseits wird bei verfestigter Schmelze das Siebband innerhalb der Siebbandförderzone verklebt, so daß ein Siebbandtransport verhindert oder eingeschränkt wird. Eine Heizung des Siebblocks kann zweckmäßig sein, um die genannten Auswirkungen abzuschwächen oder aufzuheben.

Insbesondere bei der zuvor beschriebenen Weiterbildung des erfindungsgemäßen Bandsiebwechslers kann es desweiteren vorteilhaft sein, die Temperierung der Temperierzone mittels einer durch die Siebblockhälften strömenden Flüssigkeit vorzunehmen. Um die Flüssigkeitstemperatur überwachen und gegebenenfalls einstellen zu können, bietet es sich insbesondere an, wenigstens einen Temperatursensor zur Erfassung der Flüssigkeitstemperatur vorzusehen. Wasser oder ein temperaturstabiles Heizfluid, wie beispielsweise ein Silikonöl, eignet sich besonders als Kühloder Heizmittel, da es einen guten Wärmeübergang zum Siebblock gewährleistet und somit rasch die Wärme des Siebblocks abführt oder an diesen abgibt. Eine Temperatursteuerung kann dabei durch Einstellung der Flüssigkeitsdurchflußmenge und/oder der Flüssigkeitstemperatur herbeigeführt werden.

Wie bereits vorstehend beschrieben worden ist, ist es von Vorteil, ein Heizelement, vorzugsweise eine Heizpatrone, zu verwenden, um den Siebbandvorschub herbeizuführen und insbesondere zu steuern. Hierbei sieht eine vorteilhafte Weiterbildung des erfindungsgemäßen Bandsiebwechsler vor, daß das Heizelement in der zweiten Temperierzone, insbesondere im Bereich der Siebbandauslaufseite, angeordnet ist. Der Temperaturwert und/oder die Heizdauer und/oder das zeitliche Temperaturprofil des Heizelements wird in Abhängigkeit der Ist-Sollwert-Abweichung durch die Stellvorrichtung eingestellt. Diese Weiterbildung ist dann besonders vorteilhaft, wenn sie mit einer weiteren Weiterbildung der Erfindung kombiniert wird, bei der die Siebbandförderzone in der Nähe der Siebbandauslaufseite eine Verengung aufweist, so daß das der zweiten Temperierzone zugeordnete Heizelement in der Nähe der Verengung angeordnet ist.

Eine andere Weiterbildung des zuvor beschriebenen Bandsiebwechsler sieht vor, daß die erste Temperierzone eine erste Temperaturtrennung umfaßt, welche zwischen einer ersten Kühlzone und/oder einer ersten Heizzone einerseits und der Siebblockheizung andererseits vorgesehen ist, und/oder daß die zweite Temperierzone eine zweite und/oder dritte Temperaturtrennung umfaßt, welche einerseits zwischen der Siebblockheizung und andererseits der zweiten Kühlzone und/oder der zweiten Heizzone und/oder einerseits zwischen der zweiten Kühlzone und/oder der zweiten Heizzone und andererseits der Siebbandauslaufseite des Siebblocks vorgesehen ist. Bei den Temperaturtrennstellen handelt es sich vorzugsweise um in Strömungskanalrichtung verlaufende Bohrungen und/oder um sonstige Querschnittsverengungen des Siebblocks. Diese Querschnittsverengungen erschweren bzw. verhindern weitestgehend einen Temperaturausgleich beiderseits der Temperaturtrennung, so daß ein Wärmeaustausch zwischen den einzelnen Zonen des Siebblocks erschwert wird. Insbesondere fließt die Wärme der Siebblockheizung bzw. eines im Bereich der Siebbandauslaufseite angeordneten Heizelements nicht in die jeweilige benachbarten Temperierzone ab, so daß Wärmeenergie eingespart werden kann und die einzelnen Zonen des Siebblocks ihre Aufgabe optimal erfüllen können.

Vorzugsweise wird für den Siebbandtransport kein gesonderter Antriebsmechanismus verwendet, wie dies bereits vorstehend dargelegt wurde. Vielmehr werden die in der Siebbandförderzone herrschenden durch die Schmelze verursachten Kräfte für den Siebbandtransport genutzt. Hierfür sieht eine besonders vorteilhafte Weiterbildung der erfindungsgemäßen Bandsiebwechslers vor, daß die Breite der Siebbandförderzone in Siebbandförderrichtung im wesentlichen stetig zunimmt. Infolge der Querschnittsänderungen von der Siebbandeintrittsseite zur Siebbandaustrittsseite entsteht eine in Richtung der Siebbandaustrittsseite wirkende Förderkraft, die den Vorschub des Siebbandes bewirkt. Wenn ein Kräftegleichgewicht herrscht, wird das Siebband nicht gefördert. Durch Erhöhung der Temperatur in der Siebbandförderzone wird die Schmelze weicher, d.h. ihre Scherkraft sowie die Klebekraft an der Wandung der Siebbandförderzone, nehmen ab. Sobald die Kraft in Richtung der Siebbandaustrittsseite größer ist als die Summe der entgegenwirkenden Kräfte (Kraft in Richtung der Siebbandeintrittsseite, Summe der Reibungskräfte, Haltekraft, die von der Geometrie der Siebbandförderzone, der Scherfestigkeit der zu verarbeitenden Schmelze und der Temperatur in der Siebbandförderzone abhängt), wird das Siebband von der Siebbandeinlaufseite zur Siebbandauslaufseite gefördert. Bei einer nachfolgenden Abkühlung der Siebbandförderzone wird die Haltekraft wieder größer, bis ein Kräftegleichgewicht herrscht und das Siebband damit wieder zum Stillstand kommt. Dieser Vorgang ist dann in der Regel noch mit einem reversiblen Ankleben des Siebbandes an die Wandung der Siebbandförderzone und/oder mit einer Pfropfenbildung aus erstarrter polymerer Schmelze insbesondere im Bereich der Siebbandauslaufseite verbunden.

Um die Wirkung der zuvor beschriebenen Weiterbildung des erfindungsgemäßen Bandsiebwechslers zu steigern ist die Siebbandförderzone im wesentlichen keilförmig ausgebildet und besitzt im Bereich der Siebbandauslaufseite ihre größte Breite.

Um die Reibkräfte zwischen dem Siebband und dem Siebblock, insbesondere der Wandungen der Siebblockförderzone, die während des Förderns des Siebbandes überwunden werden müssen, so gering wie möglich zu halten, sieht eine vorteilhafte Weiterbildung des erfindungsgemäßen Bandsiebwechslers vor, daß die dem Siebband zugewandten Gleitflächen der Siebbandförderzone mit einem temperaturbeständigen hochgleitfähigen Material, insbesondere mit Polytetrafluorethylen (PTFE - Teflon), beschichtet sind.

Einer besonders bevorzugte Weiterbildung des erfindungsgemäßen Bandsiebwechslers zufolge ist im Schmelzekanal stromab des Siebbandes zur Abstützung desselben eine Siebstützplatte vorgesehen. Bei der Verarbeitung von zähen Materialien werden Siebstützplatten mit größeren Bohrungsdurchmessern (Durchtrittsöffnungen) verwendet. Dadurch wird der vom Filter hervorgerufene Gegendruck verringert, so daß es zu keinen Siebbandabrissen kommt.

Je nach zu verarbeitender Schmelze bzw. herzustellendem Produkt werden unterschiedliche Siebstützplatten und Siebbänder eingesetzt. Bei der Extrusion von dünnen Folien aus Polyethylen oder Polypropylen kann beispielsweise eine Kombination von zwei Siebbändern verwendet werden, wobei das grobe Siebband, auch Stützsieb genannt, die für den Siebbandvorschub notwendige Steifigkeit und Zugfestigkeit aufweisen muß und das feine Siebband für die gewünschte Filterfeinheit verantwortlich ist. Zur Herstellung von dickwandigen Produkten, bei der keine hohen Anforderungen an die Filterfeinheit gestellt werden, kann auch lediglich ein einziges, grobes Siebband eingesetzt werden.

Zur Aufnahme von nicht verschmutztem Siebband und/oder von durch Verunreinigung verbrauchtem Siebband ist vorzugsweise jeweils ein Siebbandbehälter vorgesehen, der insbesondere eine Wicklung von nicht verbrauchtem Siebband einlaufseitig und einen Auffangbehälter von verschmutztem Siebband auslaufseitig umfaßt.

Die Anordnung des erfindungsgemäßen Bandsiebwechsler erfolgt einer bevorzugten Weiterbildung dieses Bandsiebwechslers zufolge zwischen wenigstens einem stromauf liegenden Extruder und wenigstens einem stromab liegenden Werkzeug oder wenigstens einer stromab liegenden Düse.

Insbesondere wird der erfindungsgemäße Bandsiebwechsler so ausgelegt, daß Siebbänder bis zu einem vor dem Siebband herrschenden Massedruck von 350 bis 400 bar, vorzugsweise zwischen 80 und 250 bar, (gemessen vor dem Siebband) eingesetzt werden können. Bei sehr hohen Drücken empfiehlt es sich, stromab des Siebbandes mindestens eine Stützplatte vorzusehen.

Insbesondere wird der erfindungsgemäß Bandsiebwechsler zur Filtrierung von solchen polymeren Schmelzen eingesetzt, bei denen die Durchsatzleistung zwischen 50 und 1000 kg/h variiert.

Der vorliegenden Erfindung liegt desweiteren die Aufgabe zugrunde, ein besonders einfaches, zuverlässiges und mit einem geringen Personalaufwand durchzuführendes Verfahren zum Betreiben des zuvor beschriebenen erfindungsgemäßen Bandsiebwechslers zur Verfügung zu stellen.

Diese Aufgabe wird durch ein Verfahren mit den Merkmalen des Patentanspruchs 25 gelöst.

Das erfindungsgemäße Verfahren zum Betreiben des vorstehend beschriebenen erfindungsgemäßen Bandsiebwechslers sieht vor, daß der Istwert wenigstens eines Arbeitsparameters erfaßt wird, daß der Istwert mit einem vorgebbaren Sollwert verglichen wird, daß in Abhängigkeit von wenigstens einer Ist-Sollwert-Abweichung wenigstens eine Stellgröße gebildet wird, und daß in Abhängigkeit der Stellgröße der Siebbandvorschub, insbesondere die Siebbandvorschubslänge und/oder die Siebbandvorschubsgeschwindigkeit, automatisch eingestellt wird.

Das erfindungsgemäße Verfahren weist eine Reihe von Vorteilen auf. So ist zunächst festzuhalten, daß das erfindungsgemäße Verfahren einen preiswerten Betrieb ohne unnötige, zeitintensive Rückspülungen und ohne unnötigen Schmelzeverlust ermöglicht, da das Siebband automatisch laufend oder in vorgegebenen, zeitlich voneinander getrennten Zyklen, weitertransportiert wird, sobald es verschmutzt ist, so daß ständig oder zyklisch eine unverschmutzte bzw. lediglich gering verschmutzte Siebfläche im Schmelzekanal zur Verfügung steht. Wegen des automatischen Siebbandvorschubs wird ein Siebwechsel und ein damit einhergehender Druckanstieg vermieden. Desweiteren ist festzuhalten, daß der für den Betrieb des Bandsiebwechslers erforderliche Personalaufwand im Vergleich zu den bekannten Verfahren des Standes der Technik erheblich reduziert ist, was darauf zurückzuführen ist, daß der Vorschub des Siebbandes kontinuierlich und vollständig automatisch erfolgt und während des Filterbetriebs ein Eingriff der Bedienungsperson in den Filtrierprozeß nicht erforderlich ist. Daher kann für den Betrieb weniger hoch qualifiziertes Personal eingesetzt werden, welches im wesentlichen lediglich verbrauchte Siebbandrollen gegen neue Siebbandrollen auswechseln und auf Stör- oder Fehlermeldungen, die gegebenenfalls von der Steuereinrichtung ausgegeben werden, reagieren muß. Dieses Personal wird zeitlich dadurch geringer beansprucht und kann zwischenzeitlich auch andere Aufgaben übernehmen. Desweiteren ist der Verbrauch an Siebband minimiert, da der Siebbandvorschub an die jeweiligen Betriebsbedingungen optimal angepaßt wird, was damit zusammenhängt, daß für die Einstellung des Siebbandvorschubs auf die jeweiligen Arbeitsparameter des Filterbetriebs zurückgegriffen wird, aus denen sich Rückschlüsse über den Verschmutzungsgrad des Siebbandes ziehen lassen, so daß eine ständige automatische Anpassung des Siebbandvorschubs an den Verschmutzungsgrad der jeweiligen polymeren Schmelze sowie an die Schmelze selbst erfolgt. Damit kann einerseits ein unnötig hoher Siebbandverbrauch vermieden werden und andererseits wird ständig ein optimaler Filtrierprozeß gewährleistet, da für das Filtrieren der polymeren Schmelze immer eine hinreichend saubere Filterfläche zur Verfügung steht. Hierdurch wird vermieden, daß sich ein unnötig hoher Druck oder Druckstöße stromauf des Siebbandes ausbilden, der bzw. die erhöhte Anforderungen an den Extruder stellen und/oder zu unerwünschten Fehlfunktionen seitens des stromab angeordneten Werkzeugs bzw. der Düse führen würden. Durch das erfindungsgemäße Verfahren wird eine druckkonstante Produktion unter Optimierung des Siebbandeinsatzes gewährleistet, so daß insgesamt gesehen das erfindungsgemäße Verfahren wesentlich dazu beiträgt, besonders wirtschaftlich und reproduzierbar sowie störungsfrei zu produzieren.

Bei einer besonders geeigneten Ausführungsform des erfindungsgemäßen Verfahrens wird in Abhängigkeit der Ist-Sollwert-Abweichung die Größe und/oder Dauer und/oder das zeitliche Profil der Stellgröße gebildet. Es werden somit unterschiedliche Steuerungs- oder Regelungsstrategien zur Verfügung gestellt, die sich an den jeweiligen Filtrierprozeß optimal anpassen lassen. Damit kann insbesondere dem Zeitverhalten der jeweils verwendeten Stellvorrichtung für den Siebbandvorschub Rechnung getragen werden.

Wie bereits im Zusammenhang mit dem erfindungsgemäßen Bandsiebwechsler ausgeführt wurde, wird der Siebbandvorschub vorzugsweise durch Beeinflussung der Gleitfähigkeit des Siebbandes innerhalb der Siebbandförderzone gesteuert. Diese Gleitfähigkeit läßt sich insbesondere durch wenigstens ein Heizelement, welches sich in der Nähe der Siebbandförderzone und insbesondere im Bereich der Siebbandauslaufseite und/oder Siebbandeinlaufseite vorgesehen ist, einstellen.

Eine bevorzugte Weiterbildung der zuvor beschriebenen Ausführungsvarianten des erfindungsgemäßen Verfahrens sieht hierbei vor, daß der Siebbandvorschub gemessen und mit einem vorgebbaren Sollwert verglichen wird. Aus der Abweichung vom Sollwert wird die erforderliche Temperaturänderung wenigstens eines Heizelementes, insbesondere einer Heizpatrone, ermittelt und das Heizelement dann entsprechend temperiert. Bei dieser Weiterbildung kann eine gesonderte Antriebsvorrichtung für das Siebband eingespart werden, da hierbei durch die entsprechende Temperaturführung der Siebbandvorschub bewirkt wird, wie dies bereits vorstehend bei dem erfindungsgemäßen Bandsiebwechsler ausführlich beschrieben ist.

Gemäß einer anderen Ausführungsvariante des erfindungsgemäßen Verfahrens erfolgt der Siebbandvorschub in Zyklen, d.h. somit diskontinuierlich in zeitlich aufeinanderfolgenden Schüben. Ebenso ist es möglich, den Siebbandvorschub auch kontinuierlich zu bewirken, wie dies vorstehend ebenfalls bereits beschrieben ist. Der Siebbandvorschub wird dabei, insbesondere bei jedem Zyklus, selbstoptimierend am Sollwert eingeregelt. Vorzugsweise läßt sich der Siebbandvorschub inkremental messen, wobei Abweichungen von einem Sollwert durch die Steuereinrichtung erkannt werden. Bei Verwendung eines Heizelement, wie es bereits beschrieben worden ist, wird aus den Ist-Sollwert-Abweichungen die erforderliche Temperaturänderung für das Heizelement ermittelt und der Siebbandvorschub selbstoptimierend eingeregelt.

Bei einer Betriebsweise des erfindungsgemäßen Bandsiebwechslers mit einem zyklischen Vorschub des Siebbandes hat es sich als besonders vorteilhaft herausgestellt, den aktuellen Siebbandvorschub, insbesondere die aktuelle Siebbandvorschublänge, aufgrund des bei früheren Zyklen erfolgten Siebbandvorschubes einzustellen. Zu diesem Zweck wird gemäß einer Weiterbildung des erfindungsgemäßen Verfahrens vorgeschlagen, daß aus der während eines ersten Siebbandvorschubs gewonnenen wenigstens einen Ist-Sollwert-Abweichung wenigstens eine Stellgröße gebildet wird, und daß diese Stellgröße die Aufheizzeit eines nachfolgenden Siebbandvorschubes beeinflußt.

Wie bereits im Zusammenhang mit dem erfindungsgemäßen Bandsiebwechsler vorstehend beschrieben wurde, wird bei einem diskontinuierlichen Betrieb (zyklischen Betrieb) jeder Siebbandvorschub durch ein Steuersignal ausgelöst. Zu diesem Zweck sieht eine bevorzugte Ausgestaltung des erfindungsgemäßen Verfahrens vor, daß der Siebbandvorschub zeitabhängig, insbesondere durch Ablauf eines Zeitintervall, nach einem vorhergehenden Fördervorschub, und/oder in Abhängigkeit des vor und/oder hinter dem Siebband herrschenden Schmelzedrucks und/oder dem Differenzdruck, insbesondere durch das Überschreiten eines der genannten Druckwerte, ausgelöst wird. Besonders vorteilhaft ist es, den Siebbandvorschub bei dem zu erst eintreffenden Ereignis auszulösen, entweder beim Ablauf des Zeitintervalls oder beim Überschreiten eines Druckgrenzwertes. Damit wird sichergestellt, daß regelmäßig ein Siebbandvorschub erfolgt und keine längeren Stillstandszeiten eintreten, die zu einer dauerhaften Festsetzung des Siebbandes in der Siebbandförderzone führen könnten. Andererseits wird durch die Steuereinrichtung bei einem Anstieg des vor dem Siebband herrschenden Schmelzedrucks und/oder bei einem Anstieg des Differenzdruckes, was auf eine zunehmende Verschmutzung des Siebbandes hindeutet, ein Weitertransport des Siebbandes ausgelöst, in dem beispielsweise ein Heizelement, insbesondere eine Heizpatrone, aktiviert wird.

Grundsätzlich kann bei dem erfindungsgemäßen Verfahren ein konstanter Vorschub des Siebbandes eingestellt werden, der lediglich vom vorgegebenen Sollwert abhängt. Eine besonders bevorzugte Weiterbildung des erfindungsgemäßen Verfahrens sieht jedoch vor, daß der Schmelzedruck vor und/oder hinter dem Siebband gemessen wird und daß der Siebbandvorschub, insbesondere die Siebbandvorschublänge und/oder die Siebbandvorschubgeschwindigkeit, in Abhängigkeit des vor dem Siebband herrschenden Schmelzedrucks und/oder des Differenzdruckes vorgenommen wird. Dies hat zur Folge, daß der Siebbandverbrauch weiter optimiert wird, da die gemessenen Druckverhältnisse den Verschmutzungsgrad des Siebbandes widerspiegeln und somit eine Förderung des Siebbandes in Abhängigkeit des Verschmutzungsgrades des Siebbandes erfolgt.

Vorteilhafte Weiterbildungen des erfindungsgemäßen Bandsiebwechslers sowie des erfindungsgemäßen Verfahrens sind in den Unteransprüchen angegeben.

Der vorliegenden Erfindung liegt des Weiteren die Aufgabe zugrunde, eine Verwendung des erfindungsgemäßen Bandsiebwechsler anzugeben, die bei einem minimalen Personaleinsatz und einem minimalen Siebbandverbrauch ein zuverlässiges und reproduzierbares Filtrieren erlaubt.

Diese Aufgabe wird erfindungsgemäß durch die Verwendung eines Bandsiebwechsler mit den kennzeichnenden Merkmalen des Patentanspruchs 32 gelöst.

Die erfindungsgemäße Verwendung des Bandsiebwechslers sieht vor, daß der Bandsiebwechsler zum Filtrieren von reversibel aufschmelzbaren und reversibel erstarrenden polymeren Schmelzen, insbesondere von Schmelzen aus Polypropylen (PP), Polyethylen (PE), Hochdruckpolypropylen (HDPE), Niederdruckpolyethylen (LDPE), lineares Niederdruckpolyethylen (LLDPE) und Polystyrol (PS), eingesetzt wird.

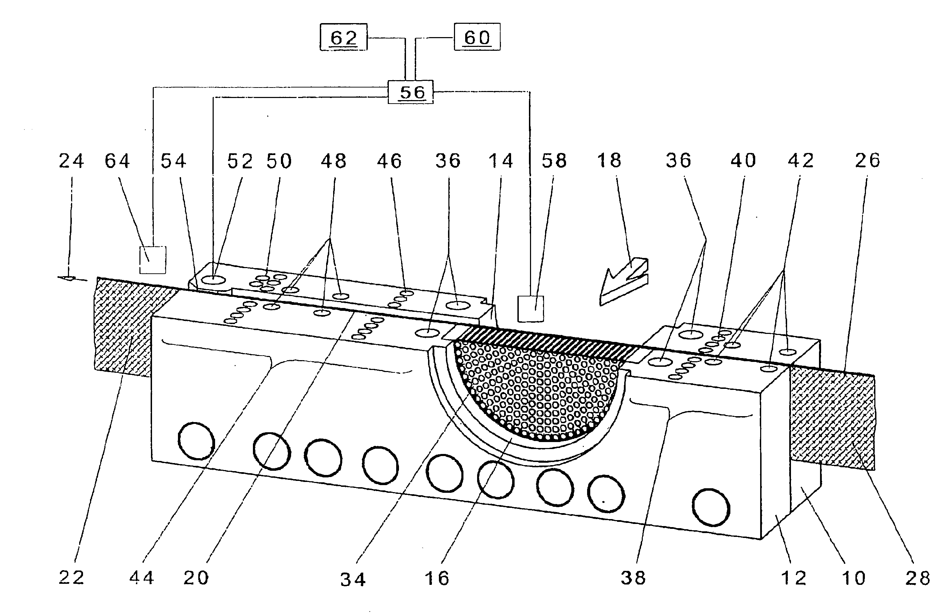

Anhand der Zeichnung, die schematisch in einer einzigen Figur ein Ausführungsbeispiel des erfindungsgemäßen Bandsiebwechslers zeigt, wird nachfolgend die Erfindung näher erläutert.

Die Figur bildet einen Siebblock ab, der aus einer ersten Siebblockhälfte 10 und einer zweiten Siebblockhälfte 12 besteht. Durch die beiden Siebblockhälften 10, 12 erstreckt sich ein Schmelzekanal, der einen Schmelzeeintrittskanal 14, der in der ersten Siebblockhälfte 10 ausgebildet ist, und einen Schmelzeaustrittskanal 16, der in der zweiten Siebblockhälfte 12, ausgebildet ist, umfaßt. Die Durchflußrichtung der zu filtrierenden polymeren Schmelze ist durch den Pfeil 18 gekennzeichnet. Der Schmelzeeintrittskanal 14 steht mit einem nicht dargestellten üblichen Extruder in Verbindung, während der Schmelzeaustrittskanal 16 mit einer nicht gezeigten üblichen Werkzeugeinheit oder einer Düse verbunden ist.

Zwischen den beiden Siebblockhälften 10, 12 ist quer zur Ausrichtung des Schmelzekanals 14, 16 eine schlitzförmige Siebbandförderzone 20 ausgebildet, durch die ein Siebband 22 transportiert wird. Die Förderrichtung des Siebband 22 ist durch den Pfeil 24 angegeben.

Das beispielhaft abgebildete Siebband 22 besteht aus zwei Komponenten, und zwar aus einem feinen Filtersieb 26, das eine reduzierte Maschenweite besitzt, und ein grobes Stützsieb 28, das primär die für den Siebbandtransport erforderliche Steifigkeit und Zugfestigkeit aufweist und das Filtersieb 26 abstützt. Das Siebband 22, das beispielsweise eine Standardlänge von 10 m aufweist, wird eingangsseitig von einem nicht dargestellten ersten Siebbandbehälter für unverbrauchtes Siebband abgezogen und ausgangsseitig auf einen nicht dargestellten zweiten Siebbandvorratsbehälter für verunreinigtes Siebband aufgenommen. Die beiden Siebbandvorratsbehälter können als Vorratskassetten ausgebildet sein. Zur weiteren Abstützung des Siebbandes 22 innerhalb des Schmelzekanals 14, 16 ist stromab des Siebbandes 22 im Schmelzeaustrittskanal 16 eine Siebstützplatte 34 vorgesehen.

In den beiden Siebblockhälften 10, 12 ist im Bereich der Filterzone rund um den Schmelzekanal 14, 16 bzw. um die Stützplatte 34 eine Siebblockheizung 36 angeordnet, die aus vier Heizpatronen besteht, welche in entsprechenden Bohrungen der Siebblockhälften 10, 12 eingesetzt sind. Durch die Siebblockheizung 36 wird die Filtrierzone auf die gewünschte Temperatur aufgeheizt, um eine Abkühlung der Schmelze im Schmelzekanal 14, 16 zu vermeiden und somit einen optimalen Filterprozeß zu gewährleisten.

In Siebbandförderrichtung 24 gesehen vor der Siebblockheizung 36 befindet sich eine erste Temperierzone 38, mit erster Temperaturtrennung 40 und einer ersten Kühlzone 42, wobei die Temperaturtrennung 40 zwischen der ersten Kühlzone 42 und der Siebblockheizung 36 liegt und diese thermisch weitgehend voneinander trennt. In Siebbandförderrichtung 24 gesehen hinter der Siebblockheizung 36 befindet sich eine zweite Temperierzone 44, mit einer zweiten Temperaturtrennung 46, einer zweiten Kühlzone 48, einer dritten Temperaturtrennung 50 und einer Heizzone, welche ein Heizelement 52 enthält. Die zweite Temperaturtrennung 46 liegt zwischen der Siebblockheizung 36 und der zweiten Kühlzone 48 und trennt diese thermisch weitgehend voneinander. Die dritte Temperaturtrennung 50 liegt zwischen der zweiten Kühlzone 48 und dem Heizelement 52 und trennt diese thermisch weitgehend voneinander. Die Temperaturtrennungen 40, 46, 48 sind vorgesehen, um die sehr unterschiedlichen Temperaturen der einzelnen Funktionszonen des Siebblocks 10, 12 aufrechterhalten zu können. So weist die Zone der Siebblockheizung 36 je nach zu verarbeitendem Kunststoff beispielsweise eine Temperatur zwischen 180°C und 240°C auf, während die Temperaturen der Kühlzonen 42, 48 beispielsweise zwischen etwa 30°C und etwa 60°C liegen. Die Temperaturtrennungen 40, 46, 48 bestehen aus quer zur Siebförderrichtung 24 in die beiden Siebblockhälften 10, 12 eingebrachten Bohrungen, durch die der Querschnitt der Siebblockhälften 10, 12 stark verringert wird, so daß die Wärmeleitung erheblich eingeschränkt ist. Falls erforderlich, kann durch diese Bohrungen ein Temperierfluid gefördert werden.

Die erste Kühlzone 42 enthält zwei Kühlbohrungen, und die zweite Kühlzone 48 enthält vier Kühlbohrungen, die insbesondere von Kühlwasser, dessen Temperatur vorzugsweise einstellbar ist, durchströmt werden.

Die extrudierte Schmelze tritt mit einem hohem Druck, beispielsweise von bis zu 350 bar bis 400 bar, durch den Schmelzekanal 14, 16 und breitet sich auch in der Siebbandförderzone 20 aus. In den beiden Kühlzonen 42, 48 erstarrt die Schmelze bzw. ihre viskosität wird soweit verändert, daß dadurch das Auslaufen der Schmelze auf beiden Seiten der Siebbandförderzone 20 verhindert wird.

Die Breite der Siebbandförderzone 20 ist nicht konstant sondern nimmt in Siebbandförderrichtung 24 stetig zu. Im Bereich der ersten Temperierzone 38 ist die Siebbandförderzone 20 relativ schmal, während sie im Bereich der zweiten Temperierzone 44 erheblich breiter ist. An ihrem siebbandauslaufseitigen Ende weist die Siebbandförderzone 20 in der Nähe des Heizelementes 52 eine Verengung 54 auf, die durch eine von der ersten Siebblockhälfte 10 vorstehende Nase gebildet wird. Infolge dieser Querschnittsveränderung von der Siebbandeintrittsseite bis zur Siebbandaustrittsseite entsteht eine in Richtung der Siebbandaustrittsseite wirkende Förderkraft, die den Vorschub des Siebbandes 22 bewirken kann. Wenn durch hohe Reibkräfte ein Kräftegleichgewicht herrscht, wird das Siebband 22 nicht gefördert. Durch Erhöhung der Temperatur in der Siebbandförderzone 20 wird die Schmelze weicher, d.h. ihre Scherkraft nimmt ab. Sobald die Kraft in Richtung Siebbandaustrittsseite größer ist als die Summe der entgegenwirkenden Kräfte (Kraft in Richtung der Siebbandeintrittsseite, Summe der Reibungskräfte, Haltekraft, die von der Geometrie der Siebbandförderzone, der Scherfestigkeit der zu verarbeitenden Schmelze und der Temperatur in der Siebbandförderzone abhängt), wird das Siebband 22 gefördert.

Bei einer nachfolgenden Abkühlung der Siebbandförderzone 20 wird die Haltekraft wieder größer, bis ein Kräftegleichgewicht herrscht und das Siebband 22 damit wieder zum Stillstand kommt. Die hierfür erforderliche Temperaturänderung wird bei der abgebildeten Ausführungsform durch das Heizelement 52 vorgenommen.

Zur automatischen Einstellung des Siebbandvorschubs ist eine Steuerung vorgesehen, die im dargestellten Ausführungsbeispiel im wesentlichen eine Steuereinrichtung 56, eine Vorrichtung zur Erfassung des Siebbandvorschubs, einen Druckmeßfühler 58, eine Eingabevorrichtung 60, und eine Visualisierungseinrichtung 62 enthält.

Als Vorrichtung zur Erfassung des Siebbandvorschubs ist ein Siebbandvorschubsensor 64 vorgesehen, durch den mechanisch, vorzugsweise jedoch berührungslos, Vorschubbewegungen des Siebbandes 22 erfaßt werden. Das Vorschubsignal wird durch die Steuereinrichtung 56 ausgewertet, indem ein Istwert gebildet wird, der je nach verwendetem Steuerungsalgorithmus die zurückgelegte Siebbandlänge oder die jeweilige Siebbandgeschwindigkeit widerspiegelt.

Der Druckmeßfühler 58 ist im Bereich des Schmelzeeintrittskanals 14 angeordnet und mißt den Druck der Schmelze, der vor dem Siebband 22 herrscht. Das Drucksignal wird durch die Steuereinrichtung 56 verarbeitet. Die Steuereinrichtung 56 gibt eine Stellgröße aus, um die Heizleistung des Heizelements 52 zu beeinflussen. Anhand der Eingabevorrichtung 60 kann die Bedienungsperson insbesondere Sollwerte und Betriebsparameter vorgeben.

Die Visualisierungseinrichtung 62 dient der optischen Darstellung von Daten. Es ist natürlich auch möglich akustische Signale, z.B. Warnsignale, auszugeben.

Wie im folgenden beschrieben wird, sind mit der dargestellten Steuerung unterschiedliche Betriebsweisen des Bandsiebwechslers möglich.

Eine erste Betriebsweise sieht vor, in einem zyklischen oder getakteten Betrieb Auslöseimpuls und Zyklusdauern für die Betriebszyklen festzulegen. In jedem Betriebszyklus wird das Heizelement 52 zwischen Heizphase, in der das Heizelement Heizleistung an den Siebblock abgibt, und Ruhephase, in der keine Heizleistung abgegeben wird, umgeschaltet. Während der Heizphase wird die Schmelze in der Siebbandförderzone 20 ab- bzw. angeschmolzen und es erfolgt ein Siebbandvorschub aufgrund der in der Siebbandförderzone 20 herrschenden und auf das Siebband 22 wirkenden Kräfte, wie diese vorstehend beschrieben sind. Während der Ruhephase erstarrt die Schmelze und/oder ändert ihre Viskosität und unterbindet einen Siebbandvorschub.

Der Druckmeßfühler mißt den Schmelzedruck vor dem Siebband. Bei verschmutzungsbedingtem Druckanstieg aktiviert die Steuereinrichtung 56 die Heizphase. Dabei hängt die Dauer der Heizphase von dem Meßwert des Siebbandvorschubsensors 64 ab. Nach Ablauf eines Zyklus wird der in dem Zyklus zurückgelegte Istwert des Siebbandvorschubs durch die Steuereinrichtung 56 mit einem durch die Bedienungsperson anhand der Eingabevorrichtung 60 einstellbaren Sollwert verglichen. Ist der Betrag der Differenz dieser beiden Werte größer als ein definierter Toleranzwert, so wird die Heizphase des folgenden Zyklus entsprechend verlängert oder verkürzt, so daß sich der Siebbandvorschub bei jedem Zyklus selbstoptimierend am Sollwert einregelt.

An Stelle der geschilderten Beeinflussung der Heizdauer ist es auch möglich gleichzeitig oder alternativ das Temperaturniveau des Heizelements entsprechend der Ist-Sollwert-Abweichung einzustellen.

Eine zweite Betriebsweise sieht einen zyklischen Betrieb mit gleichbleibenden Zyklusdauern, insbesondere mit konstanter Dauer der Heizphase und konstanter Dauer der Ruhephase vor. Die Zyklusdauer ist durch die Bedienungsperson einstellbar. Bei dieser Betriebsweise wird aus dem Meßwert des Druckmeßfühlers 58 ein Druck-Istwert gebildet, der mit einem durch die Bedienungsperson vorgebbaren Sollwert verglichen wird. Dabei spiegelt der Druck-Istwert den Verschmutzungsgrad des Siebbandes wider. Die Heizenergie des Heizelement 52 wird durch die Steuereinrichtung 56 während der Heizphase entsprechend der Ist-Sollwert-Abweichung angepaßt, wodurch sich die Siebbandvorschubgeschwindigkeit während der Heizphase beeinflussen läßt. Es kann ergänzen oder alternativ auch zweckmäßig sein, die Gesamtzyklusdauer konstant zu halten und den jeweiligen Zeitanteil der Heizphase und der Ruhephase aufgrund der Ist-Sollwert-Abweichung zu variieren.

Eine dritte Betriebsweise sieht einen kontinuierlichen Betrieb vor, bei dem das Siebband ständig gefördert wird. Durch Variation der Heizleistung des Heizelements 52 läßt sich hierbei die Siebbandvorschubgeschwindigkeit optimal an die Erfordernisse anpassen, da die Siebbandvorschubgeschwindigkeit wesentlich von der Heizleistung des Heizelements 52 abhängt.

Zur Einstellung der Siebbandvorschubgeschwindigkeit wird der vor dem Siebband herrschende Schmelzedruck durch den Druckmeßfühler 58 erfaßt und mit einem durch die Bedienungsperson vorgebbaren Sollwert verglichen. Aus der Ist-Sollwert-Abweichung, die entsprechend des Druck-Istwertes von dem Verschmutzungsgrad des Siebbandes abhängt, wird eine Stellgröße zur Beeinflussung der Heizleistung des Heizelements 52 gebildet. Damit läßt sich die Siebbandvorschubgeschwindigkeit an den Verschmutzungsgrad des Siebbandes anpassen. Es ist hierbei auch möglich den Meßwert des Siebbandvorschubsensors 64 in die Regelung einzubeziehen, in dem beispielsweise die Siebbandvorschubsgeschwindigkeit begrenzt wird. Hierdurch läßt sich ein ungewollt schnelle Siebbandvorschubgeschwindigkeit und damit ein zu hoher Siebbandverbrauch vermeiden.

Eine vierte Betriebsweise sieht eine Temperaturregelung für die An- bzw. Aufschmelzzone vor. Die An- bzw. Aufschmelzzone ist ein Bereich in der Nähe des Heizelements 52. Der Siebbandvorschub erfolgt durch das Aufheizen in der An- bzw. Aufschmelzzone auf den Temperatursollwert, der einen Siebbandvorschub ermöglicht. Der Regler wird bei zyklischem Betrieb mit dem Auslösen jedes Siebbandvorschubs oder mit der manuellen Aktivierung eines Anfahrmodus eingeschaltet. Erreicht der gemessene Temperatur-Istwert der An- bzw. Aufschmelzzone den eingestellten, vorgebbaren Temperatur-Sollwert, der einem vorgebbaren Siebbandvorschub entspricht, wird der Temperaturregler der An- bzw. Aufschmelzzone wieder deaktiviert. Mit fallendem Temperatur-Istwert wird der Siebbandvorschubzyklus automatisch abgeschlossen.

Beim Anfahrmodus wird der Regler ausgeschaltet, sobald der Anfahrmodus beendet ist. Der Temperaturregler für die Heizung des Heizelements 52 kann als 2-Punktregler ausgeführt sein (nur Heizfunktion) . Für den Regler können eine Reihe von Parametern vorgegeben werden, wie z.B. ein Temperatursollwert für den gewünschten Siebbandvorschubzyklus, eine Schaltperiodendauer und dergleichen. Desweiteren können Regelparameter vorgegeben werden, wie Reglerverstärkung, Integrationszeitkonstante und/oder Differentialzeitkonstante.

Die genannten Betriebsweisen wurden lediglich beispielhaft aufgeführt und begrenzen nicht den Schutzumfang der durch die Patentansprüche definierten Erfindung. So ist es beispielsweise möglich, einen an Stelle des durch den Druckmeßfühler 58 gemessenen vor dem Siebband herrschenden Drucks einen Differenzdruck für die Steuerung oder Regelung zu verwenden, der aus den stromauf und stromab des Siebbandes gemessenen Drücken gebildet wird. Die Verwendung eines Differenzdrucks erfordert zwar einen weiteren Drucksensor, hat jedoch den Vorteil, das der Differenzdruck empfindlicher auf die durch eine Siebbandverschmutzung hervorgerufenen Druckänderungen der Schmelze reagiert. Es kann auch vorteilhaft sein, die Schmelzetemperatur, die Viskosität der Schmelze und/oder die Fließgeschwindigkeit der Schmelze in die Steuerung oder Regelung einzubeziehen.

Durch die Visualisierungseinrichtung 62 können der Bedienungsperson sämtliche erforderliche Eingabe- und Betriebsdaten visualisiert werden, wie Anfahrmodus, Anzeige der Restbandlänge, Meldung eines anstehenden erforderlichen Siebbandwechsels (z.B. 20 cm vor dem Siebbandende), eintrittsseitiger und austrittsseitiger Schmelzedruck, Schmelzetemperatur, Siebblocktemperatur, Kühlwassertemperatur und dergleichen.

Die Eingabevorrichtung 60 kann desweiteren Funktionstasten zum manuellen Ein- und Ausschalten der Heizung des Heizelements 52, zur Einstellung eines optimalen Siebbandvorschubbetriebs, zum Abbrechen eines Siebbandvorschubs, zur Auslösung eines Anfahrmodus und dergleichen aufweisen.

## Patentansprüche

1. Bandsiebwechsler zum kontinuierlichen Filtrieren einer polymeren Schmelze mit zwei Siebblockhälften (10, 12), zwischen denen eine schlitzförmige Siebbandförderzone (20) zur Aufnahme eines transportierbaren Siebbandes (22) ausgebildet ist, mit einem quer zum Siebband (22) verlaufenden Schmelzekanal (14, 16), mit einer dem Schmelzekanal (14, 16) zugeordneten Siebblockheizung (36), mit einer siebbandeinlaufseitigen, in Transportrichtung des Siebbandes (22) gesehen vor der Siebblockheizung (36) angeordneten ersten Temperierzone (38) und mit einer siebbandauslaufseitigen, in Transportrichtung des Siebbandes (22) gesehen hinter der Siebblockheizung (36) angeordneten zweiten Temperierzone(44), **dadurch gekennzeichnet, daß** der Bandsiebwechsler wenigstens eine Meßvorrichtung zur Erfassung von mindestens einem Istwert eines Arbeitsparameters und wenigstens eine Steuereinrichtung (56) aufweist, die den Istwert mit einem vorgebbaren Sollwert vergleicht und in Abhängigkeit von wenigstens einer Ist-Sollwert-Abweichung wenigstens eine Stellgröße erzeugt, und daß in Abhängigkeit dieser Stellgröße wenigstens eine Stellvorrichtung den Siebbandvorschub, insbesondere die Siebbandvorschubslänge und/oder die Siebbandvorschubsgeschwindigkeit, automatisch einstellt.

2. Bandsiebwechsler nach Anspruch 1, **dadurch gekennzeichnet, daß** eine Vorrichtung (64) zur mechanischen oder berührungslosen, insbesondere inkrementalen, Erfassung des Siebbandvorschubs vorgesehen ist, deren Istwert als Arbeitsparameter herangezogen wird.

3. Bandsiebwechsler nach einem der vorangehenden Ansprüche, **dadurch gekennzeichnet, daß** wenigstens ein Druckmeßfühler (58) zur Erfassung des Schmelzedruckes stromauf und/oder stromab des Siebbandes (22) und/oder zur Erfassung des Differenzdruckes vorgesehen ist und daß der Meßwert des Druckmeßfühlers (58) den Sollwert beeinflußt.

4. Bandsiebwechsler nach einem der vorangehenden Ansprüche, **dadurch gekennzeichnet, daß** wenigstens ein Druckmeßfühler (58) zur Erfassung des Schmelzedruckes stromauf und/oder stromab des Siebbandes (22) und/oder zur Erfassung des Differenzdruckes vorgesehen ist, daß wenigstens ein Druckgrenzwert vorgegeben wird, daß der Druckmeßwert mit dem Druckgrenzwert verglichen wird und daß ein Siebbandvorschub ausgelöst wird, sobald der Druckmeßwert den Druckgrenzwert übersteigt.

5. Bandsiebwechsler nach einem der vorangehenden Ansprüche, **dadurch gekennzeichnet, daß** ein Zeitintervall vorgebbar ist und daß ein Siebbandvorschub ausgelöst wird, sobald das Zeitintervall abgelaufen ist.

6. Bandsiebwechsler nach einem der vorangehenden Ansprüche, **dadurch gekennzeichnet, daß** wenigstens ein Druckmeßfühler zur Erfassung des Schmelzedruckes stromauf und/oder stromab des Siebbandes (22) und/oder zur Erfassung des Differenzdruckes vorgesehen ist, dessen Istwert jeweils als Arbeitsparameter herangezogen wird.

7. Bandsiebwechsler nach einem der vorangehenden Ansprüche, **dadurch gekennzeichnet, daß** eine Vorrichtung zur Messung der Viskosität und/oder der Fließgeschwindigkeit der Schmelze vorgesehen ist, deren Istwert jeweils als Arbeitsparameter herangezogen wird.

8. Bandsiebwechsler nach einem der vorangehenden Ansprüche, **dadurch gekennzeichnet, daß** die Stellvorrichtung wenigstens ein Heizelement (52), insbesondere eine Heizpatrone, umfaßt, deren Temperaturwert und oder deren Heizdauer und/oder deren zeitliches Temperaturprofil in Abhängigkeit der Ist-Sollwert-Abweichung eingestellt wird.

9. Bandsiebwechsler nach einem der vorangehenden Ansprüche, **dadurch gekennzeichnet, daß** wenigstens ein Temperatursensor zur Erfassung der Temperatur der in den Bandsiebwechsler einströmenden und/oder der aus dem Bandsiebwechsler ausströmenden Schmelze vorgesehen ist.

10. Bandsiebwechsler nach einem der vorangehenden Ansprüche, **dadurch gekennzeichnet, daß** eine Visualisierungseinrichtung (62) vorgesehen ist, die unterschiedliche Eingabe- und Betriebsdaten, wie insbesondere Anfahrmodus, unverbrauchte und/oder verbrauchte Siebbandlänge, verbleibende Arbeitszeit der unverbrauchten Siebbandlänge, Meldung eines anstehenden Siebwechsels, Schmelzedrücke, Schmelzetemperaturen und/oder produkt- und/oder maschinenbezogene Daten, visualisiert.

11. Bandsiebwechsler nach einem der vorangehenden Ansprüche, **dadurch gekennzeichnet, daß** die Steuerungseinrichtung (56) wenigstens einen geschlossenen Regelkreises enthält.

12. Bandsiebwechsler nach einem der vorangehenden Ansprüche, **dadurch gekennzeichnet, daß** die erste und/oder die zweite Temperierzone (38, 44) eine erste bzw. zweite Kühlzone (42, 48) und/oder eine erste bzw. zweite Heizzone umfaßt.

13. Bandsiebwechsler nach einem der vorangehenden Ansprüche, **dadurch gekennzeichnet, daß** die Temperierung der Temperierzone durch eine durch die Siebblockhälften (10, 12) strömende Flüssigkeit, insbesondere Wasser, erfolgt und daß vorzugsweise wenigstens ein Temperatursensor zur Erfassung der Flüssigkeitstemperatur vorgesehen ist.

14. Bandsiebwechsler nach einem der vorangehenden Ansprüche, **dadurch gekennzeichnet, daß** die zweite Temperierzone (44) wenigstens ein Heizelement (52), vorzugsweise eine Heizpatrone, umfaßt, die insbesondere im Bereich der Siebbandauslaufseite angeordnet ist und deren Temperaturwert und/oder deren Heizdauer und/oder deren zeitliches Temperaturprofil in Abhängigkeit der Ist-Sollwert-Abweichung durch die Stellvorrichtung eingestellt wird.

15. Bandsiebwechsler nach einem der vorangehenden Ansprüche, **dadurch gekennzeichnet, daß** die Siebbandförderzone (20) in der Nähe der Siebbandauslaufseite eine Verengung (54) aufweist und das vorzugsweise in der Nähe der Verengung (54) das der zweiten Temperierzone (44) zugeordnete Heizelement (52) angeordnet ist.

16. Bandsiebwechsler nach einem der vorangehenden Ansprüche, **dadurch gekennzeichnet, daß** die erste Temperierzone (38) eine erste Temperaturtrennung (40), insbesondere in Form von in Querrichtung angeordneten Bohrungen und/oder sonstigen Querschnittsverengungen des Siebblocks (10, 12), umfaßt, welche zwischen einer ersten Kühlzone (42) und/oder einer ersten Heizzone und der Siebblockheizung (36) vorgesehen ist, und/oder daß die zweite Temperierzone (44) eine zweite und/oder dritte Temperaturtrennung (46, 50), insbesondere in Form von in Querrichtung angeordneten Bohrungen und/oder sonstigen Querschnittsverengungen des Siebblocks (10, 12), umfaßt, welche zwischen der Siebblockheizung (36) und der zweiten Kühlzone (48) und/oder der zweiten Heizzone und/oder zwischen der zweiten Kühlzone (48) und/oder der zweiten Heizzone und der Siebbandauslaufseite des Siebblocks (10, 12) vorgesehen ist.

17. Bandsiebwechsler nach einem der vorangehenden Ansprüche, **dadurch gekennzeichnet, daß** die Breite der Siebbandförderzone (20) in Siebbandförderrichtung (24) im wesentlichen stetig zunimmt.

18. Bandsiebwechsler nach Anspruch 17, **dadurch gekennzeichnet, daß** die Siebbandförderzone (20) im wesentlichen keilförmig ausgebildet ist und im Bereich der Siebbandauslaufseite ihre größte Breite besitzt.

19. Bandsiebwechsler nach einem der vorangehenden Ansprüche, **dadurch gekennzeichnet, daß** dem Siebband (22) zugewandte Gleitflächen der Siebbandförderzone (20) mit einem temperaturbeständigen hochgleitfähigen Material, insbesondere mit Polytetrafluorethylen (PTFE), beschichtet sind.

20. Bandsiebwechsler nach einem der vorangehenden Ansprüche, **dadurch gekennzeichnet, daß** im Schmelzekanal (14, 16) stromab des Siebbandes (22) zur Abstützung desselben eine Siebstützplatte (34) vorgesehen ist.

21. Bandsiebwechsler nach einem der vorangehenden Ansprüche, **dadurch gekennzeichnet, daß** wenigstens ein Siebbandbehälter zur Aufnahme des Siebbandes (22) vorgesehen ist.

22. Bandsiebwechsler nach einem der vorangehenden Ansprüche, **dadurch gekennzeichnet, daß** der Bandsiebwechsler zwischen wenigstens einem stromauf liegenden Extruder und wenigstens einem stromab liegenden Werkzeug oder wenigstens einer stromab liegenden Düse angeordnet ist.

23. Bandsiebwechsler nach einem der vorangehenden Ansprüche, **dadurch gekennzeichnet, daß** Siebbänder (22) bis zu einem vor dem Siebband (22) herrschenden Massedruck von 350 bis 400 bar verwendbar sind.

24. Bandsiebwechsler nach einem der vorangehenden Ansprüche, **dadurch gekennzeichnet, daß** der Bandsiebwechsler für eine Durchsatzleitung zwischen 50 und 1000 kg/h ausgelegt ist.

25. Verfahren zum Betreiben eines Bandsiebwechslers nach einem der vorangehenden Ansprüche, **dadurch gekennzeichnet, daß** der Istwert wenigstens eines Arbeitsparameters erfaßt wird, daß der Istwert mit einem vorgebbaren Sollwert verglichen wird, daß in Abhängigkeit von wenigstens einer Ist-Sollwert-Abweichung wenigstens eine Stellgröße gebildet wird, und daß in Abhängigkeit der Stellgröße der Siebbandvorschub, insbesondere die Siebbandvorschubslänge und/oder die Siebbandvorschubsgeschwindigkeit, automatisch eingestellt wird.

26. Verfahren nach Anspruch 25, **dadurch gekennzeichnet, daß** die Größe und/oder Dauer und/oder das zeitliche Profil der Stellgröße in Abhängigkeit der Ist-Sollwert-Abweichung gebildet wird.

27. Verfahren nach Anspruch 25 oder 26, **dadurch gekennzeichnet, daß** der Siebbandvorschub gemessen und mit einem vorgebbaren Sollwert verglichen wird und daß aus Abweichungen vom Sollwert die erforderliche Temperaturänderung wenigstens eines Heizelementes, insbesondere einer Heizpatrone, ermittelt wird.

28. Verfahren nach einem der Ansprüche 25 bis 27, **dadurch gekennzeichnet, daß** der Siebbandvorschub in Zyklen oder kontinuierlich erfolgt und daß der Siebbandvorschub, insbesondere bei jedem Zyklus, selbstoptimierend am Sollwert eingeregelt wird.

29. Verfahren nach einem der Ansprüche 27 oder 28, **dadurch gekennzeichnet, daß** bei einer Betriebsweise, die einen zyklischen Vorschub des Siebbandes vorsieht, aus der während eines ersten Siebbandvorschubs gewonnenen wenigstens einen Ist-Sollwert-Abweichung wenigstens eine Stellgröße gebildet wird, und daß diese Stellgröße die Aufheizzeit eines nachfolgenden Siebbandvorschubs beeinflußt.

30. Verfahren nach einem der Ansprüche 25 bis 29, **dadurch gekennzeichnet, daß** der Siebbandvorschub zeitabhängig und/oder in Abhängigkeit des stromauf und/oder stromab des Siebbandes herrschenden Schmelzedrucks und/oder dem Differenzdruck ausgelöst wird.

31. Verfahren nach einem der Ansprüche 25 bis 30, **dadurch gekennzeichnet, daß** der Schmelzedruck stromauf und/oder stromab des Siebbandes gemessen wird und daß der Siebbandvorschub, insbesondere die Siebbandvorschublänge und/oder die Siebbandvorschubgeschwindigkeit, in Abhängigkeit des stromauf des Siebbandes herrschenden Schmelzedrucks und/oder des Differenzdruckes vorgenommen wird.

32. Verwendung des Bandsiebwechslers nach einem der Ansprüche 1 bis 24, **dadurch gekennzeichnet, daß** der Bandsiebwechsler zum Filtrieren von reversibel aufschmelzbaren und reversibel erstarrenden Polymeren, insbesondere von Polypropylen (PP), Polyethylen (PE), Hochdruckpolypropylen (HDPE), Niederdruckpolyethylen (LDPE), lineares Niederdruckpolyethylen (LLDPE) und Polystyrol (PS), eingesetzt wird.
